# EUROPEAN PATENT APPLICATION

(11) **EP 4 730 872 A1**
(43) Date of publication of application: **22.04.2026**
(21) Application number: 25150902.2
(22) Date of filing: 09.01.2025
(51) Int. Cl.: H04W 48/18, H04W 48/12, H04W 88/06

(54) **METHOD, USER EQUIPMENT, BASE STATION FOR RADIO ACCESS TECHNOLOGY SELECTION**

(30) Priority: 21.10.2024 TW 113139868
(71) Applicant: Wistron Corporation, New Taipei City 22181 (TW)
(72) Inventor: WANG, Shih Ting, 22181 New Taipei City (TW); FAN, Yu Wei, 22181 New Taipei City (TW)
(74) Representative: Becker, Eberhard

(57) **Abstract**

A method, a user equipment (100), and a base station (200) for radio access technology selection are provided. The method includes: receiving a system information block corresponding to a base station (200), where the system information block includes an indicator; accessing a network by one of a first radio access technology and a second radio access technology according to the indicator, where the second radio access technology is different from the first radio access technology.

## Description

### BACKGROUND

### Technical Field

The disclosure relates to a wireless communication technology, and particularly relates to a method, a user equipment (UE), and a base station (BS) for radio access technology (RAT) selection.

### Description of Related Art

In the procedure of network selection by the user equipment, the user equipment may determine which radio access technology to use for a network attach based on the supported radio access technologies according to the received base station information. However, before completing the attach procedure, the user equipment may not determine whether the radio access technology in use is applicable to the network currently serving the user equipment. If the attach procedure is rejected by the network, the user equipment may decide whether to continue using the current radio access technology or use other radio access technologies to obtain network service according to the reason code returned by the network. The aforementioned procedure may cause the user equipment to spend a significant amount of time searching for non-existent radio access technology network deployments in the area.

### SUMMARY

The disclosure provides a method, a user equipment, and a base station for radio access technology selection, which can save time spent by the user equipment on a network attach.

In an embodiment of the disclosure, a user equipment for radio access technology selection includes a transceiver and a processor. The processor is coupled to the transceiver, where the processor is configured to execute: receiving, through the transceiver, a system information block corresponding to a base station, where the system information block includes an indicator; and accessing a network with one of a first radio access technology and a second radio access technology according to the indicator, where the second radio access technology is different from the first radio access technology.

In an embodiment of the disclosure, a base station for radio access technology selection includes a transceiver and a processor. The processor is coupled to the transceiver, where the processor is configured to execute: sending, through the transceiver, a system information block to a user equipment, where the system information block includes an indicator; receiving, through the transceiver, a response message associated with the indicator from the user equipment; and providing a network to the user equipment based on a radio access technology according to the response message.

In an embodiment of the disclosure, a method for radio access technology selection is applicable to a user equipment. The method includes the following steps. A system information block corresponding to a base station is received, where the system information block includes an indicator. A network with one of a first radio access technology and a second radio access technology is accessed according to the indicator, where the second radio access technology is different from the first radio access technology.

Based on the above, the user equipment of the disclosure may obtain information about the radio access technology supported by the base station earlier before performing the network attach, thereby using the most suitable radio access technology for the network attach according to the information. Accordingly, the disclosure may significantly reduce the probability of network attach failure and the time spent on the network attach.

### BRIEF DESCRIPTION OF THE DRAWINGS

FIG. 1 illustrates a schematic diagram of a wireless communication network architecture.
FIG. 2 illustrates a schematic diagram of a SA network architecture and an NSA network architecture.
FIG. 3 illustrates a signaling diagram of a traditional network attach rejection procedure.
FIG. 4 illustrates a flowchart of radio access technology selection according to an embodiment of the disclosure.
FIG. 5 illustrates a schematic diagram of parameters of a SIB type 1 as defined in 3GPP TS36.331.
FIG. 6 illustrates a signaling diagram of a network attach based on a SA mode.
FIG. 7 illustrates a flowchart of an EPS attach.
FIG. 8 illustrates a flowchart of a combined EPS/IMSI attach.
FIG. 9 illustrates a signaling diagram of accessing a 5G NSA network using an ENDC according to an embodiment of the disclosure.
FIG. 10 illustrates a schematic diagram of a user equipment according to an embodiment of the disclosure.
FIG. 11 illustrates a schematic diagram of a base station according to an embodiment of the disclosure.
FIG. 12 illustrates a flowchart of a method for radio access technology selection according to an embodiment of the disclosure.
FIG. 13 illustrates a flowchart of a method for radio access technology selection according to an embodiment of the disclosure.

### DESCRIPTION OF THE EMBODIMENTS

Abbreviations defined in this disclosure are shown in Table 1 below.

**Table 1**

| abbreviation | Full name |
|---|---|
| 3G | 3rd-generation of mobile telecommunications technology |
| 4G | 4th-generation of mobile telecommunications technology |
| 5G | 5th-generation of mobile telecommunications technology |
| 5GC | 5G core network |
| BCCH | broadcast control channel |
| CS | circuit switched |
| CSFB | CS fallback |
| DCNR | Dual Connectivity New Radio |
| eNB | evolved node B |
| ENDC | E-UTRAN new radio-dual connectivity |
| EPC | evolved packet core |
| EPS | evolved packet system |
| GUTI | globally unique temporary UE identity |
| gNB | next generation node B |
| IMS | IP multimedia subsystem |
| IMSI | international mobile subscriber identity |
| LTE | long term evolution (LTE) |
| MIB | master information block |
| MM | mobility management |
| MME | mobility management entity |
| NGAP | next generation application protocol |
| ngKSI | new generation key set identifier |
| NodeB | Node B |
| NR | new radio |
| NSA | non-standalone |
| NW | network |
| PLMN | public land mobile network |
| PS | packet switched |
| RAT | radio access technology |
| RRC | radio resource control (RRC) |
| SA | standalone |
| SIB | system information block |
| SMS | short message service |
| TAI | tracking area identity |
| TAU | tracking area update |
| UE | user equipment |
| UMTS | universal mobile telecommunication system (UMTS) |
| USIM | UMTS subscriber identity module |
| WCDMA | wideband code division multiple access (WCDMA) |

After the UE is turned on, the UE may synchronize with a base station and obtain relevant information of the base station through BCCH. The UE may execute a network attach procedure according to the information. In an embodiment, the UE may receive MIB, where the MIB may include basic information for cell selection or cell access. For example, the MIB may include information such as reference sub-carrier spacing or BCCH.

It is assumed that the UE supports a 5G SA mode and a 5G NSA mode. After receiving information from the 5G base station, the UE may execute the network attach procedure with the base station. If the core network of the base station does not support the 5G SA mode, the UE may receive an attach rejection message including a reason code from the network side. The UE may re-execute the selection procedure for other RATs. Referring to 3GPP TS24.501, if the reason code received by the UE is "reject cause#3(illegal UE) & #9(UE identity cannot be derived by the network)", the UE may delete any 5G-GUTI as well as the last visited registered TAI, TAI list, and ngKSI, and disable 5G services of the USIM card until the UE is powered off or the USIM card is removed. The UE may also delete equivalent PLMN, and update the mobility management status to deregistered state (5GMM-DEREGISTERED). Furthermore, if the UE is in a single-attach mode, the UE may not be able to connect to any core network, such as 5GC or 4G EPC after the MM status is updated to registered state. The UE may not be able to use any communication services and may not be able to complete data transfer. In other words, the UE may disable any data-related services (for example, PS service disabled) and attempt to register for WCDMA RAT (that is, 3G network service) in the CS domain. However, for UEs supporting the 5G NSA mode or LTE RAT, WCDMA is not the optimal radio access technology. The traditional way is to disable the SA mode support of the communication device for the network after encountering the aforementioned situation. If the network is configured to support the SA mode in the future, the communication device may not be able to use the service of the 5G SA mode provided by the network.

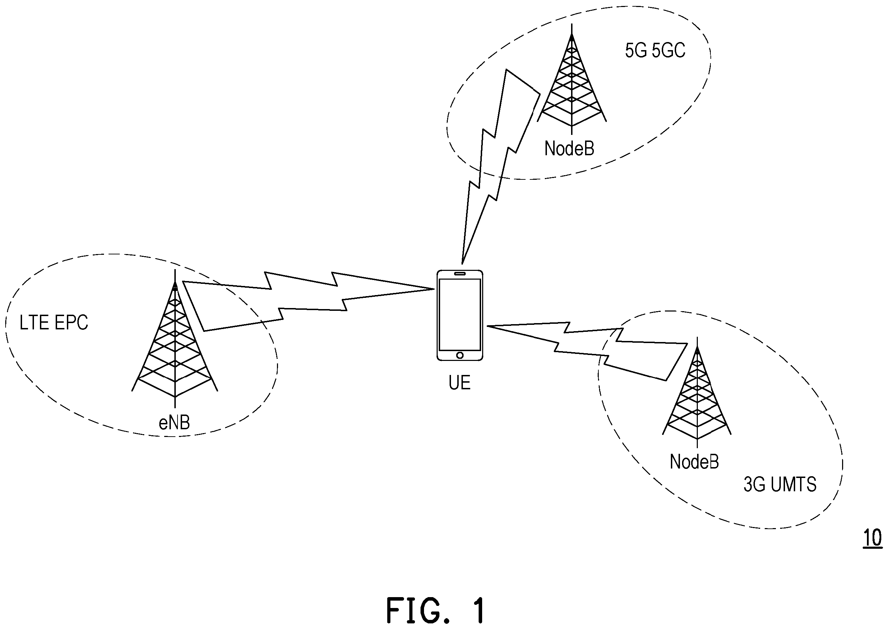

FIG. 1 illustrates a schematic diagram of a wireless communication network architecture 10. A UE supporting multiple RATs may search for wireless communication signals according to communication specifications and select an appropriate base station for attach. Taking FIG. 1 as an example, if the UE supports 5G 5GC, LTE EPC, and 3G UMTS, the UE may select gNB, eNB, or NodeB to perform a network attach.

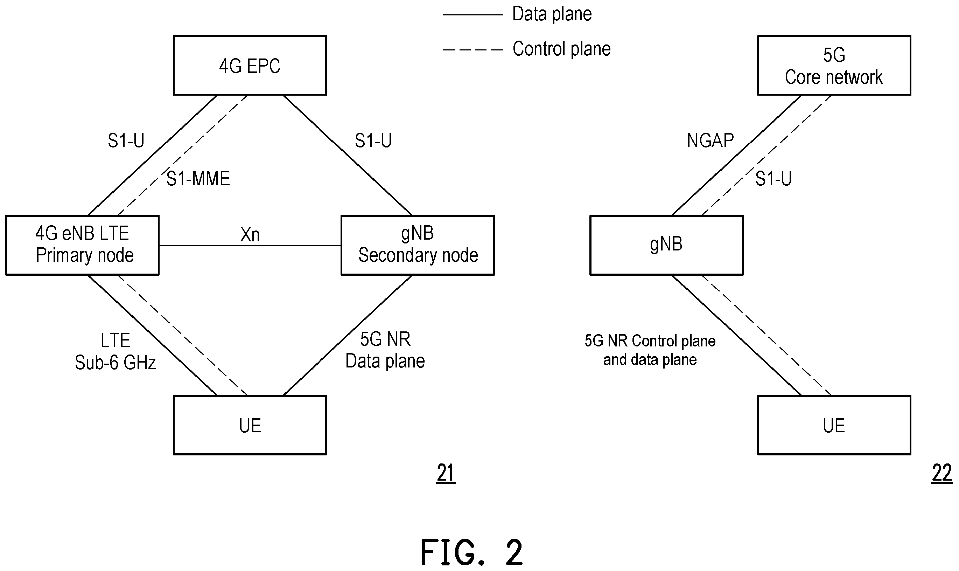

FIG. 2 illustrates a schematic diagram of a SA network architecture 22 and an NSA network architecture 21. The network architecture 21 deploys gNB on the LTE network infrastructure. The eNB and gNB share the LTE core network EPC. Control signals from the EPC are all transmitted to the eNB (for example, transmitted to the eNB via the S1-U interface). There is an Xn interface between the LTE eNB and the 5G gNB. The eNB and gNB may communicate through the Xn interface. The gNB may provide 5G bearer configuration for the UE. The UE may perform measurements according to the configuration and access the 5G network using ENDC. In another aspect, the UE may directly search for the 5G gNB and perform the network attach directly with the gNB in the network architecture 22.

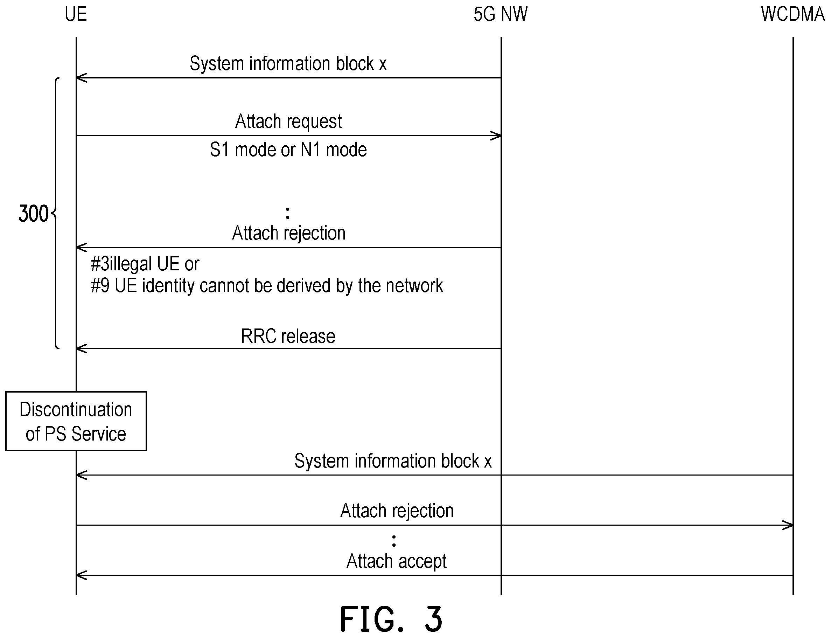

FIG. 3 illustrates a signaling diagram of a traditional network attach rejection procedure. It is assumed that the UE initiates a SA attach procedure 300 without considering whether the core network of the 5G base station supports the SA mode. The UE may only discover that the network does not support the SA mode after initiating the SA attach procedure 300 and receiving an attach rejection message (for example, a message including reason code #3 or #9). After receiving the attach rejection message, the UE may execute the corresponding procedure according to 3GPP specifications. If the UE operates in an environment of the single-attach mode (that is, only one MM status for EPC or 5GC) at this time, an update of the MM status may be deregistered. The UE may turn off the function of the Packet Service and then search for a 3G UMTS base station. In the aforementioned procedure, the UE may spend additional time re-registering with other RAT networks.

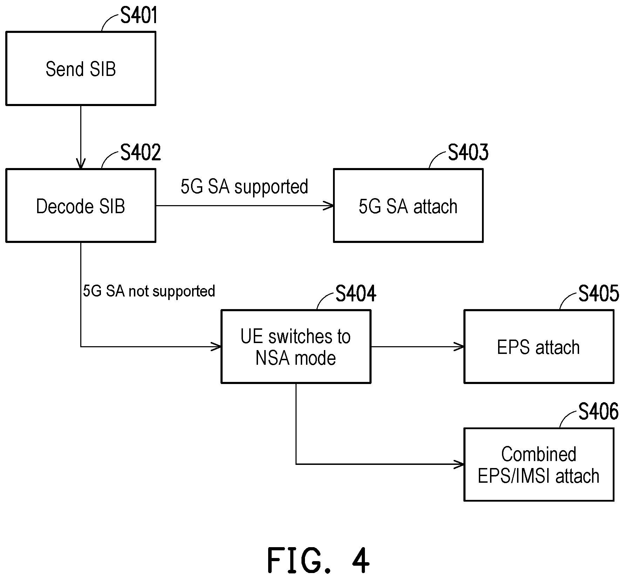

FIG. 4 illustrates a flowchart of radio access technology selection according to an embodiment of the disclosure. In Step S401, the base station may send a SIB to the UE, where the SIB may include an indicator. The UE may receive the SIB from the base station before performing the network attach. The SIB is, for example, a SIB type 1. The indicator may be configured to indicate whether the base station supports the SA mode. The initial mode of the UE is, for example, the SA mode. In the SA mode, the UE may receive a SIB corresponding to SA mode and may not receive a SIB corresponding to the NSA mode.

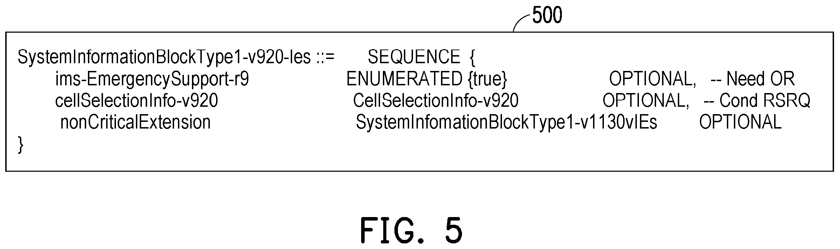

FIG. 5 illustrates a schematic diagram of the parameters of a SIB type 1 as defined in 3GPP TS36.331. In the system information parameters 500 of the SIB type 1, "ims-EmergencySupport-r9" is configured to indicate whether the network side supports IMS emergency calls. The base station may add a parameter "5GSA-Support" in the system information parameters 500 of the SIB type 1 to indicate whether the base station supports the SA mode.

Returning to FIG. 4, the UE may decode the SIB to obtain the indicator, and determine whether the base station supports the SA mode according to the indicator in Step S402. If the indicator indicates that the base station supports the SA mode, the UE may execute Step S403. If the indicator indicates that the base station does not support the SA mode, the UE may execute Step S404.

In Step S403, the UE may access the network provided or served by the base station using RAT which supports the 5G SA mode. The UE may execute a 5G SA network attach based on the SA mode to complete the attach.

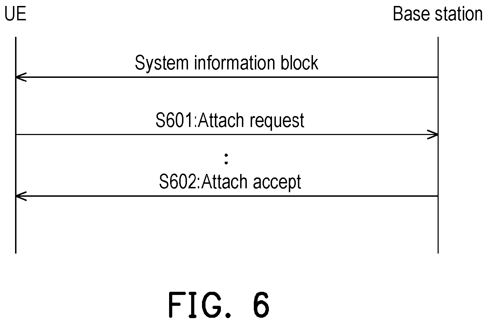

FIG. 6 illustrates a signaling diagram of a network attach based on a SA mode. After obtaining the indicator of the SIB and determining that the base station supports the SA mode, the UE may send a response message associated with the indicator to the base station. Specifically, the UE may send an attach request corresponding to the SA mode to the base station to perform the network attach in Step S601. The base station may perform the network attach corresponding to the SA mode for the UE according to the attach request. If the attach is successful, the base station may send an attach accept to the UE in Step S602. After receiving the attach accept, the UE may access the network provided by the base station using RAT which supports the SA mode. The base station may provide the network to the UE based on RAT which supports the SA mode.

In an embodiment, if the network attach of the SA mode is unsuccessful, the UE may send a network attach request corresponding to the NSA mode to other base stations (that is, base stations which do not serve the UE). In another aspect, the UE may also switch the priority of network attach modes. The UE may adjust the SA mode, which is in a default state of high priority, to low priority, or may adjust the NSA mode, which is in a default state of low priority, to high priority. The attach request may be configured to request an EPS attach or a combined EPS/IMSI attach. After the base station (for example, other base stations) receives the attach request corresponding to the NSA mode, the base station may perform the network attach corresponding to the NSA mode for the UE according to the attach request. After successful attach, the base station may provide the network to the UE using RAT which supports the NSA mode. The UE may access the network provided by the base station using RAT which supports the NSA mode.

In an embodiment, if the network attach of the SA mode is unsuccessful, the attach rejection message received by the UE from the network side may not include the reason codes "reject cause#3 (illegal UE) & #9 (UE identity cannot be derived by the network)". In other words, after receiving the attach rejection message, the UE may not attempt to register the WCDMA RAT (that is, the 3G network service) in the CS domain, but instead switch from the SA mode to the NSA mode, as shown in Step S404.

Returning to FIG. 4, the UE may switch from the SA mode to the NSA mode in Step S404. In the NSA mode, the UE may receive the SIB corresponding to the NSA mode and may not receive the SIB corresponding to the SA mode. If the UE does not support the combined EPS/IMSI attach, the UE may execute Step S405. If the UE supports the combined EPS/IMSI attach, the UE may execute Step S406.

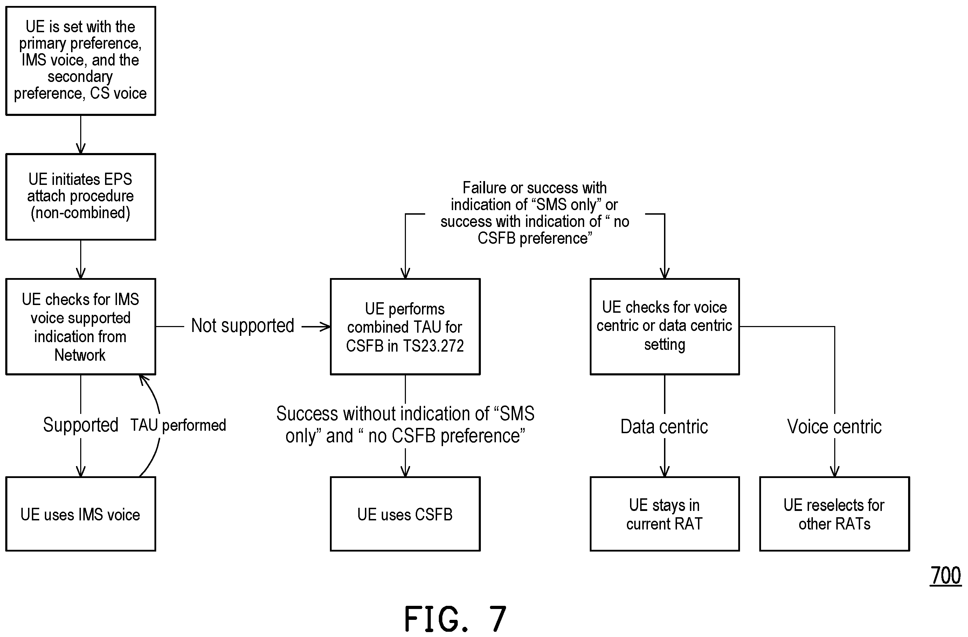

In Step S405, the UE may send a response message including the attach request corresponding to the NSA mode to the base station to request the base station to execute the EPS attach. After receiving the attach request, the base station may perform the network attach for the UE according to the attach request, thereby completing the EPS attach. The UE and the base station may complete the EPS attach based on the EPS attach procedure provided in FIG. A.2.1-1 of 3GPP TS23.221, as shown in a procedure 700 in FIG. 7. After completing the EPS attach, the base station may provide the network to the UE using RAT which supports the NSA mode. The UE may access the network provided by the base station using RAT which supports the NSA mode.

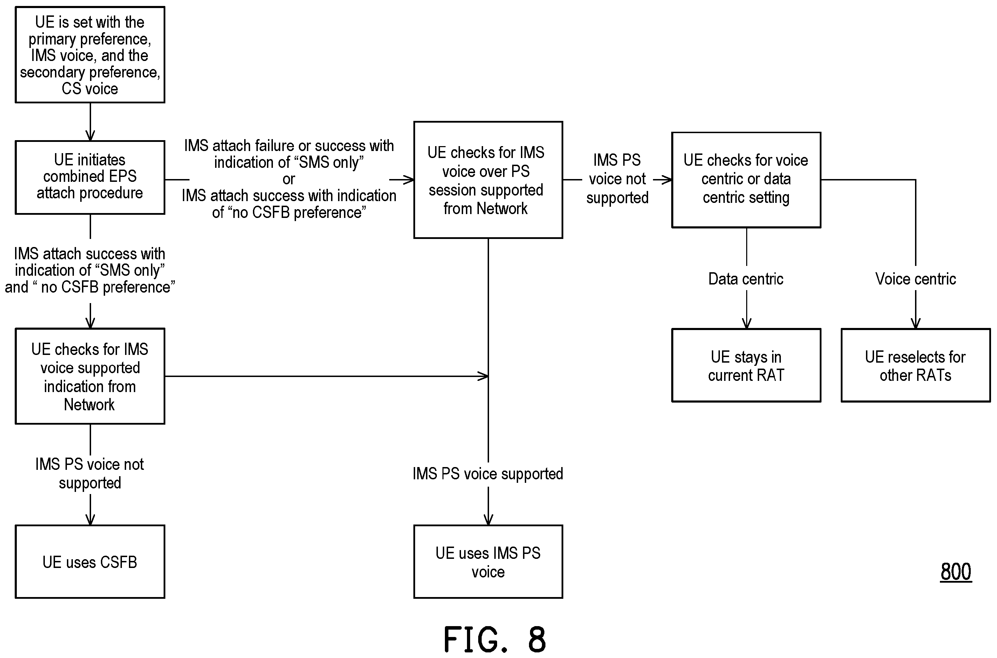

In Step S406, the UE may send the response message including the attach request corresponding to the NSA mode to the base station to request the base station to execute the combined EPS/IMSI attach. After receiving the attach request, the base station may perform the network attach for the UE according to the attach request, thereby completing the combined EPS/IMSI attach. The UE and the base station may complete the combined EPS/IMSI attach based on the combined EPS/IMSI attach provided in FIG. A.2.2-1 of 3GPP TS23.221, as shown in a procedure 800 in FIG. 8. After completing the combined EPS/IMSI attach, the base station may provide the network to the UE using RAT which supports the NSA mode. The UE may access the network provided by the base station using RAT which supports the NSA mode.

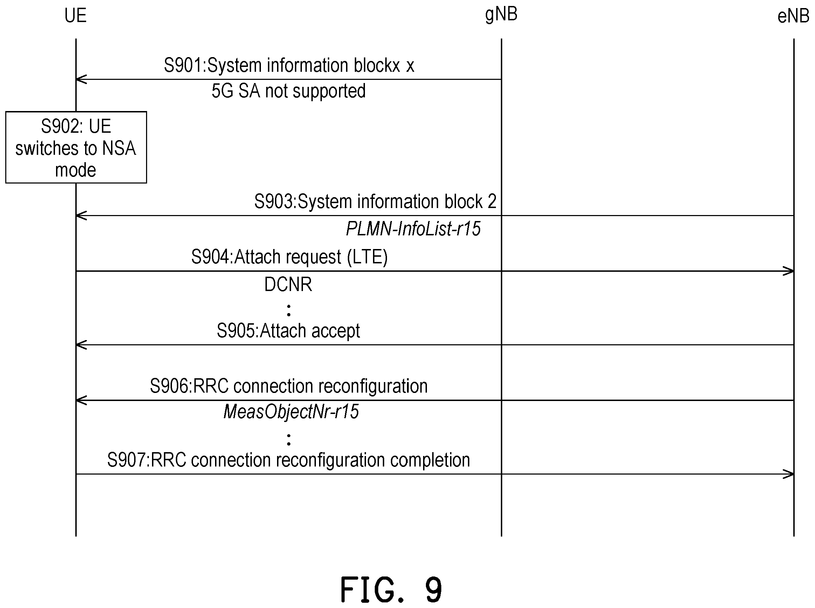

FIG. 9 illustrates a signaling diagram for accessing a 5G NSA network using an ENDC according to an embodiment of the disclosure. In Step S901, the gNB may send a SIB x to the UE, where the SIB x may include an indicator for indicating that the gNB does not support the 5G SA mode.

In Step S902, the UE may switch from the SA mode to the NSA mode to register with the eNB for a 4G LTE network.

In Step S903, the eNB may send a SIB 2 including PLMN-InfoList-r15 to the UE.

In Step S904, the UE may send an attach request including DCNR to the eNB to request the eNB to execute an LTE network attach procedure for the UE.

In Step S905, the eNB may send an attach accept to the UE.

In Step S906, the eNB may send a RRC connection reconfiguration including MeasObjectNr-r15 to the UE.

In Step S907, the UE may send RRC connection reconfiguration completion to the eNB.

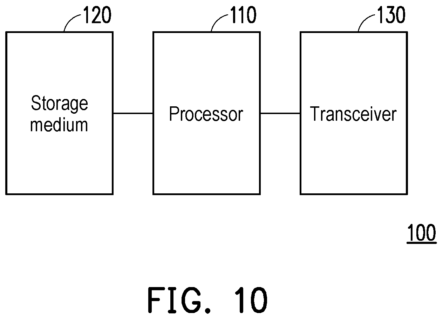

FIG. 10 illustrates a schematic diagram of a user equipment 100 according to an embodiment of the disclosure. The user equipment 100 may execute the procedures or steps performed by the UE as shown in the embodiments of FIG. 1 to FIG. 9. The user equipment 100 may include a processor 110, a storage medium 120, and a transceiver 130.

The processor 110 is, for example, a central processing unit (CPU), a micro control unit (MCU) for a common purpose or a specific purpose, a microprocessor, a digital signal processor (DSP), a programmable controller, an application specific integrated circuit (ASIC), a graphics processing unit (GPU), an image signal processor (ISP), an image processing unit (IPU), an arithmetic logic unit (ALU), a complex programmable logic device (CPLD), a field programmable gate array (FPGA), other similar elements, or a combination of the aforementioned elements. The processor 110 may be coupled to the storage medium 120 and the transceiver 130, and access and execute multiple modules and various application programs stored in the storage medium 120.

The storage medium 120 is, for example, any type of a fixed or removable random access memory (RAM), a read-only memory (ROM), a flash memory, a hard disk drive (HDD), a solid state drive (SSD), similar elements, or a combination of the aforementioned elements, and is configured to store multiple modules or the various application programs which may be executed by the processor 110.

The transceiver 130 sends or receives signals wirelessly or via wire. The transceiver 130 may also perform operations such as low noise amplification, impedance matching, frequency mixing, up or down frequency conversion, filtering, or amplification. The user equipment 100 may send wireless signals to or receive wireless signals from the base station through the transceiver 130.

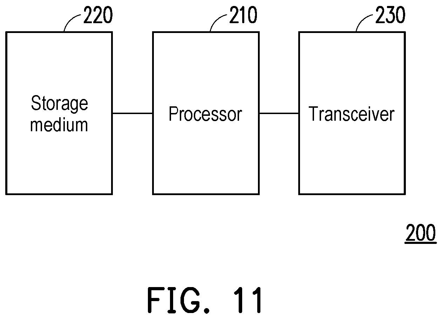

FIG. 11 illustrates a schematic diagram of a base station 200 according to an embodiment of the disclosure. The base station 200 may execute the procedures or steps performed by the base station as shown in the embodiments of FIG. 1 to FIG. 9. The base station 200 may include a processor 210, a storage medium 220, and a transceiver 230.

The processor 210 is, for example, a central processing unit, a micro control unit for a common purpose or a specific purpose, a microprocessor, a digital signal processor, a programmable controller, an application specific integrated circuit, a graphics processing unit, an image signal processor, an image processing unit, an arithmetic logic unit, a complex programmable logic device, a field programmable gate array, other similar elements, or a combination of the aforementioned elements. The processor 210 may be coupled to the storage medium 220 and the transceiver 230, and access and execute multiple modules and various application programs stored in the storage medium 220.

The storage medium 220 is, for example, any type of a fixed or removable random access memory, a read-only memory, a flash memory, a hard disk drive, a solid state drive, similar elements, or any combination thereof, and is configured to store multiple modules or the various application programs executed by the processor 210.

The transceiver 230 sends or receives signals wirelessly or via wire. The transceiver 230 may also perform operations such as low noise amplification, impedance matching, frequency mixing, up or down frequency conversion, filtering, or amplification. The base station 200 may send wireless signals to or receive wireless signals from the UE through the transceiver 230.

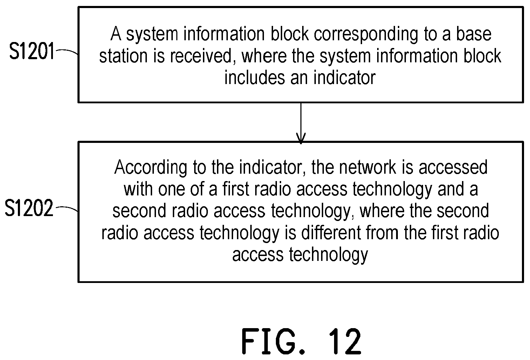

FIG. 12 illustrates a flowchart of a method for radio access technology selection according to an embodiment of the disclosure. The method may be implemented by the user equipment 100 as shown in FIG. 10. In Step S1201, a system information block corresponding to a base station is received, where the system information block includes an indicator. In Step S1202, according to the indicator, the network is accessed with one of a first radio access technology and a second radio access technology, where the second radio access technology is different from the first radio access technology.

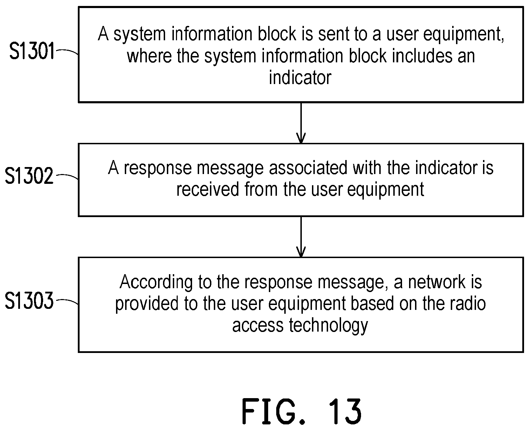

FIG. 13 illustrates a flowchart of a method for radio access technology selection according to an embodiment of the disclosure. The method may be implemented by the base station 200 as shown in FIG. 11. In Step S1301, a system information block is sent to a user equipment, where the system information block includes an indicator. In Step S1302, a response message associated with the indicator is received from the user equipment. In Step S1303, according to the response message, a network is provided to the user equipment based on the radio access technology.

In summary, the user equipment of the disclosure may receive the system information block provided by the base station before registering with the network, and obtain the indicator from the system information block for indicating whether the base station supports a specific radio access technology. The user equipment may determine which radio access technology to use for the network attach with the base station according to the indicator, or determine whether to register with other base stations. Compared to the traditional network attach procedure where the user equipment may only know the unsupported radio access technology by the base station after attach failure, the user equipment of the disclosure may obtain information about the radio access technology supported by the base station in advance before the network attach, thereby using the most suitable radio access technology for the network attach based on the information. Accordingly, the disclosure may significantly reduce the probability of the network attach failure and the time spent on the network attach.

## Claims

1. A user equipment (100) for radio access technology selection, comprising:
a transceiver (130); and
a processor (110), coupled to the transceiver (130), wherein the processor (110) is configured to execute:
receiving, through the transceiver (130), a system information block corresponding to a base station (200), wherein the system information block comprises an indicator; and
accessing a network with one of a first radio access technology and a second radio access technology according to the indicator, wherein the second radio access technology is different from the first radio access technology.

2. The user equipment (100) according to claim 1, wherein the processor (110) is further configured to execute:
determining whether the base station (200) supports a standalone mode according to the indicator; and
in response to determining that the base station (200) supports the standalone mode, accessing the network provided by the base station (200) with the first radio access technology.

3. The user equipment (100) according to claim 2, wherein the processor (110) is further configured to execute:
sending, through the transceiver (130), an attach request corresponding to the standalone mode to the base station (200), to perform a network attach.

4. The user equipment (100) according to claim 3, wherein the processor (110) is further configured to execute:
in response to the network attach being unsuccessful, accessing the network with the second radio access technology.

5. The user equipment (100) according to claim 4, wherein the network is provided by another base station.

6. The user equipment (100) according to claim 1, wherein the processor (110) is further configured to execute:
determining whether the base station (200) supports a standalone mode according to the indicator; and
in response to determining that the base station (200) does not support the standalone mode, accessing the network with the second radio access technology.

7. The user equipment (100) according to claim 6, wherein the processor (110) is further configured to execute:
sending, through the transceiver (130), an attach request corresponding to a non-standalone mode, to perform a network attach.

8. The user equipment (100) according to claim 7, wherein the attach request corresponds to one of an evolved packet system attach and a combined evolved packet system and international mobile subscriber identity attach.

9. The user equipment (100) according to claim 6, wherein the network is provided by another base station.

10. The user equipment (100) according to claim 1, wherein the processor (110) is further configured to execute:
receiving the system information block before performing a network attach.

11. A base station (200) for radio access technology selection, comprising:
a transceiver (230); and
a processor (210), coupled to the transceiver (230), wherein the processor (210) is configured to execute:
sending, through the transceiver (230), a system information block to a user equipment (100), wherein the system information block comprises an indicator;
receiving, through the transceiver (230), a response message associated with the indicator from the user equipment (100); and
providing a network to the user equipment (100) based on a radio access technology according to the response message.

12. The base station (200) according to claim 11, wherein the indicator indicates that the base station (200) supports a standalone mode, and the response message comprises an attach request corresponding to the standalone mode, wherein the processor (210) is further configured to execute:
performing a first network attach for the user equipment (100) according to the attach request, wherein the first network attach corresponds to the standalone mode.

13. The base station (200) according to claim 12, wherein the processor (210) is further configured to execute:
in response to the first network attach being unsuccessful, sending, through the transceiver (230), an attach rejection message to the user equipment (100), wherein the attach rejection message does not comprise either a reason code 3 or a reason code 9.

14. The base station (200) according to claim 11, wherein the processor (210) is further configured to execute:
sending the system information block before performing a network attach for the user equipment (100).

15. A method for radio access technology selection, applicable to a user equipment (100), wherein the method comprises:
receiving a system information block corresponding to a base station (200), wherein the system information block comprises an indicator; and
accessing a network with one of a first radio access technology and a second radio access technology according to the indicator, wherein the second radio access technology is different from the first radio access technology.

## Amended claims

### Amended claims in accordance with Rule 137(2) EPC.

1. A user equipment (100) for radio access technology selection, comprising:
a transceiver (130); and
a processor (110), coupled to the transceiver (130), wherein the processor (110) is configured to execute:
receiving, through the transceiver (130), a system information block corresponding to a base station (200), wherein the system information block comprises an indicator;
determining whether the base station (200) supports a standalone mode according to the indicator;
in response to determining that the base station (200) supports the standalone mode, accessing a network provided by the base station (200) with a first radio access technology; and
in response to determining that the base station (200) does not support the standalone mode, accessing a network with a second radio access technology, wherein the second radio access technology is different from the first radio access technology.

2. The user equipment (100) according to claim 1, wherein the processor (110) is further configured to execute:
sending, through the transceiver (130), an attach request corresponding to the standalone mode to the base station (200), to perform a network attach.

3. The user equipment (100) according to claim 2, wherein the processor (110) is further configured to execute:
in response to the network attach being unsuccessful, accessing the network with the second radio access technology.

4. The user equipment (100) according to claim 3, wherein the network is provided by another base station.

5. The user equipment (100) according to claim 1, wherein the processor (110) is further configured to execute:
sending, through the transceiver (130), an attach request corresponding to a non-standalone mode, to perform a network attach.

6. The user equipment (100) according to claim 5, wherein the attach request corresponds to one of an evolved packet system attach and a combined evolved packet system and international mobile subscriber identity attach.

7. The user equipment (100) according to claim 1, wherein the network is provided by another base station.

8. The user equipment (100) according to claim 1, wherein the processor (110) is further configured to execute:
receiving the system information block before performing a network attach.

9. A base station (200) for radio access technology selection, comprising:
a transceiver (230); and
a processor (210), coupled to the transceiver (230), wherein the processor (210) is configured to execute:
sending, through the transceiver (230), a system information block to a user equipment (100), wherein the system information block comprises an indicator;
receiving, through the transceiver (230), a response message associated with the indicator from the user equipment (100);
in response to the user equipment (100) determines that the base station (200) supports a standalone mode, providing a network to the user equipment (100) based on a first radio access technology according to the response message; and
in response to the user equipment (100) determines that the base station (200) does not support the standalone mode, providing the network to the user equipment (100) based on a second radio access technology according to the response message.

10. The base station (200) according to claim 9, wherein the indicator indicates that the base station (200) supports the standalone mode, and the response message comprises an attach request corresponding to the standalone mode, wherein the processor (210) is further configured to execute:
performing a first network attach for the user equipment (100) according to the attach request, wherein the first network attach corresponds to the standalone mode.

11. The base station (200) according to claim 10, wherein the processor (210) is further configured to execute:
in response to the first network attach being unsuccessful, sending, through the transceiver (230), an attach rejection message to the user equipment (100), wherein the attach rejection message does not comprise either a reason code 3 or a reason code 9.

12. The base station (200) according to claim 9, wherein the processor (210) is further configured to execute:
sending the system information block before performing a network attach for the user equipment (100).

13. A method for radio access technology selection, applicable to a user equipment (100), wherein the method comprises:
receiving a system information block corresponding to a base station (200), wherein the system information block comprises an indicator;
determining whether the base station (200) supports a standalone mode according to the indicator;
in response to determining that the base station (200) supports the standalone mode, accessing a network provided by the base station (200) with a first radio access technology; and
in response to determining that the base station (200) does not support the standalone mode, accessing the network with a second radio access technology, wherein the second radio access technology is different from the first radio access technology.
